# EUROPÄISCHE PATENTSCHRIFT

(11) **EP 3 058 325 B1**
(45) Veröffentlichungstag und Bekanntmachung des Hinweises auf die Patenterteilung: **22.05.2024**
(21) Anmeldenummer: 14811753.4
(22) Anmeldetag: 14.10.2014
(51) Int. Cl.: G01J 5/00, G01J 5/04, G01J 5/02

(54) **TEMPERATURMESSVORRICHTUNG MIT EINEM GEHÄUSE, EINER ISOLATION UND EINEM THERMOGENERATOR**
TEMPERATURE MEASURING DEVICE COMPRISING A HOUSING, AN INSULATION AND A THERMOGENERATOR
DISPOSITIF DE MESURE DE TEMPÉRATURE COMPRENANT UN BOÎTIER, UN ISOLANT ET UN GÉNÉRATEUR THERMOÉLECTRIQUE

(30) Priorität: 18.10.2013 DE 102013017318
(43) Veröffentlichungstag der Anmeldung: 24.08.2016
(73) Patentinhaber: Hude GmbH, 41812 Erkelenz (DE)
(72) Erfinder: WAHLERS, Reinhold, 46240 Bottrop (DE); STELZER, Tommy, 41468 Neuss (DE)
(74) Vertreter: Castell, Klaus
(86) Internationale Anmeldenummer: PCT/DE2014/000507
(87) Internationale Veröffentlichungsnummer: WO 2015/055165

(56) Entgegenhaltungen:
- EP-A1- 1 624 724
- EP-A1- 2 336 695
- EP-A2- 0 081 245
- CN-U- 202 403 825

## Beschreibung

Die Anmeldung betrifft eine Messvorrichtung mit einem Gehäuse und einer Messeinrichtung.

Eine derartige Messvorrichtung ist aus der EP 0 081 245 A2 bekannt. Dabei wird ein Pyrometer als Messeinrichtung durch ein luftgespültes Gehäuse geschützt.

Ein spezielles Bratenthermometer ist aus der EP 1 624 724 A1 bekannt. Bei diesem Bratenthermometer ermittelt ein Temperaturfühler die Bratentemperatur und der Temperaturfühler hat einen Thermogenerator, um den gemessenen Wert kabellos an einen im Ofen angebrachten Empfänger zu senden. Der in den Braten gesteckte Temperaturfühler hat im Braten eine aktive Zone, mit einem Temperatursensor, um die Bratentemperatur zu ermitteln, und im Bereich des Griffs ist ein Bereich mit wärmedurchlässigem Material vorgesehen, der die Temperatur des Inneren des Ofens annimmt. Die Temperaturdifferenz zwischen der kühleren Temperatur im Inneren des Bratens und der relativ dazu wärmeren Temperatur im Ofen wird für den Thermogenerator genutzt. Für besonders hohe Temperaturen ist diese Vorrichtung nicht geeignet, da die hohen Temperaturen die Funktion der in der aktiven Zone angeordneten Teile beeinträchtigen würde.

Für die Messung von Temperaturen in Koksöfen ist eine derartige Vorrichtung nicht geeignet, da dort in derart heißen Bereichen gemessen wird, dass isolierte Gehäuse verwendet werden müssen, um die in der Messvorrichtung angeordnete Messeinrichtung zu schützen. Insbesondere bei besonders hohen Temperaturen wie beispielsweise oberhalb von 1.000 °C müssen auch die Zuleitungen zur Messeinrichtung gekühlt werden, die dazu dienen, die Messwerte abzugreifen und die Messeinrichtung mit Energie zu versorgen. Derartige Hochtemperaturmesseinrichtungen sind daher teuer in der Herstellung und umständlich im Gebrauch.
den, die dazu dienen, die Messwerte abzugreifen und die Messeinrichtung mit Energie zu versorgen. Derartige Hochtemperaturmesseinrichtungen sind daher teuer in der Herstellung und umständlich im Gebrauch.

Beim Messen von Temperaturen in Koksöfen werden beim Ausschieben des Kokses die Temperaturen der Wände gemessen, um absolute Temperaturen und die Temperaturverteilung zu ermitteln.

Der Erfindung liegt die Aufgabe zu Grunde, eine derartige Messvorrichtung weiter zu entwickeln.

Diese Aufgabe wird mit einer Messvorrichtung mit den Merkmalen des Patentanspruchs 1 gelöst Ein Thermogenerator ermöglicht es, eine Temperaturdifferenz zur Energieerzeugung zu verwenden. Sowie die gesamte Messvorrichtung vollständig erhitzt ist, liegt keine Temperaturdifferenz mehr vor und der Thermogenerator liefert keine Energie mehr.

Der Erfindung liegt die Erkenntnis zugrunde, dass bei vielen Messaufgaben Messungen in besonders hohen Temperaturbereichen durchgeführt werden müssen, die Messvorrichtung jedoch nur eine bestimmte Zeit dem hohen Temperaturniveau ausgesetzt sein muss. Die während des Aufheizens der Messvorrichtung in einem besonders temperaturbelasteten Raum vorliegende Temperaturdifferenz an der Messvorrichtung kann somit über einen Thermogenerator dafür verwendet werden, Energie für die Messeinrichtung bereit zu stellen.

Als Isolationsmittel kann Steinwolle verwendet werden.

Kumulativ oder alternativ kann die Isolation als evakuierte Hülle ausgebildet sein. Die Messeinrichtung kann somit beispielsweise in einer Art Thermoskanne angeordnet sein. Dabei ist zwischen zwei die Messeinrichtung umhüllenden Wänden eine Gasfüllung oder ein Vakuum vorgesehen, um die Messeinrichtung gegenüber der die Messeinrichtung umgebenden Temperatur zu schützen.

In der Praxis wird somit eine Messvorrichtung mit einem Thermogenerator ausgestattet und eine bestimmte Zeit lang einem besonders hohen Temperaturniveau ausgesetzt. Während dieser Zeit wird die Temperaturdifferenz zwischen Außenseite und Innenseite der Messvorrichtung dazu genutzt, Energie bereit zu stellen, um während dieses Messzeitraums die Messeinrichtung mit Energie zu versorgen.

Die Messeinrichtung weist ein Pyrometer auf. Die Messvorrichtung kann dann auf einfache Art und Weise extrem hohe Temperaturen messen, denen die Messvorrichtung ausgesetzt ist. Das Pyrometer ist im Gehäuse der Messvorrichtung geschützt angeordnet und wird über die Messeinrichtung und den Thermogenerator mit Strom versorgt.

Um im Gehäuse eine Messeinrichtung anzuordnen, die einen Zustand außerhalb des Gehäuses messen kann, weist die Messvorrichtung ein Messfenster auf. Das Messfenster hat vorzugsweise ein Quarzglas wie beispielsweise Hereaus HOQ 310. Bevorzugt werden zwei beabstandet zueinander angeordnete Scheiben aus Quarzglas vorgesehen, um durch dazwischenliegendes Gas oder Vakuum eine Isolation im Fensterbereich zu erzielen. Je nach Ausführungsform können auch mehrere Messfenster, wie beispielsweise auch gegenüberliegenden Messfenster vorgesehen sein.

Um die Messdaten von der Messeinrichtung zu einer Messwerteauswerteeinrichtung zu übertragen werden üblicherweise Kabel verwendet. Da diese Kabel bei extrem hohen Temperaturen gekühlt werden müssen, wird vorgeschlagen, dass die Messvorrichtung eine Funkeinrichtung aufweist.

Die Funkeinrichtung sollte innerhalb eines stabilen Gehäuses angeordnet sein, das ausreichend gegen Wärme geschützt ist. Andererseits muss die Funkeinrichtung auch eine an geeigneter Stelle positionierte Antenne aufweisen. Daher wird vorgeschlagen, dass die Messvorrichtung ein Antennenfenster aufweist. Dies ermöglicht es, die Antenne mit der Messeinrichtung innerhalb des isolierten Gehäuses vorzusehen, ohne dass die Funktion der Antenne zu stark beeinträchtigt wird.

Die starke Temperaturdifferenz führt anfangs zu viel nutzbarer Energie, wobei während des Messvorganges sich die Messvorrichtung aufheizt und die Temperaturdifferenz und damit auch die zur Verfügung stehende Spannung sinkt. Um trotzdem eine kontinuierliche Spannung in möglichst lange anhaltender gleicher Höhe für die Messeinrichtung zur Verfügung zu stellen, wird vorgeschlagen, dass die Messvorrichtung einen Energiespeicher aufweist. Ein derartiger Energiespeicher ist in der Regel ein Acku.

Eine bevorzugte Ausführungsvariante sieht vor, dass die Isolation eine minimale Dicke zwischen Messeinrichtung und Gehäuse von 20 mm hat. Dadurch wird ein ausreichender Schutz der Messeinrichtung erzielt, um auch bei Temperaturen über 1.000 °C zu messen.

Um einerseits eine gewisse Isolation durch das Gehäuse zu erzielen und andererseits die Trägheit des Wärmedurchgangs zu nutzen, wird vorgeschlagen, dass das Gehäuse eine minimale Dicke zwischen Gehäuseinnenwand und Gehäuseaußenwand von 20 mm hat.

Die thermische Trägheit wird beispielsweise dadurch genutzt, dass das Gehäuse einen Stahlmantel aufweist. Ein Gehäuse aus massivem Stahl, das eine Manteldicke von mindestens 20 mm aufweist, wird zwar schnell von außen heiß. In Folge der thermischen Trägheit dauert es jedoch relativ lange, bis auch die Gehäuseinnenseite heiß wird.

Ein konstruktiv einfacher Aufbau einer derartigen Messeinrichtung wird dadurch erreicht, dass das Gehäuse zylinderförmig ist. Ein zylinderförmiges Gehäuse hat eine zylinderförmige Wandung, die ein Antennenfenster aufweisen kann.

Vorteilhaft ist es, wenn das Gehäuse gegenüberliegende Messfenster und quer dazu ein Antennenfenster aufweist. Dabei können die Messfenster an den Stirnseiten des zylinderförmigen Gehäuses angeordnet sein, während quer dazu in der zylinderförmigen Wandung das Antennenfenster angeordnet ist.

Eine derartige Messvorrichtung eignet sich besonders in Verbindung mit einer Ausschubeinrichtung eines Koksofens. Dafür können an der Ausschubeinrichtung eines Koksofens, vorzugsweise mehrere Gehäuse mit Messeinrichtungen angeordnet sein. Dies ermöglicht es, beim Ausschieben des Kokses aus dem Koksofen mittels der Messvorrichtung in übereinander liegenden Bereichen die Temperatur der heißen Wände des Koksofens zu messen.

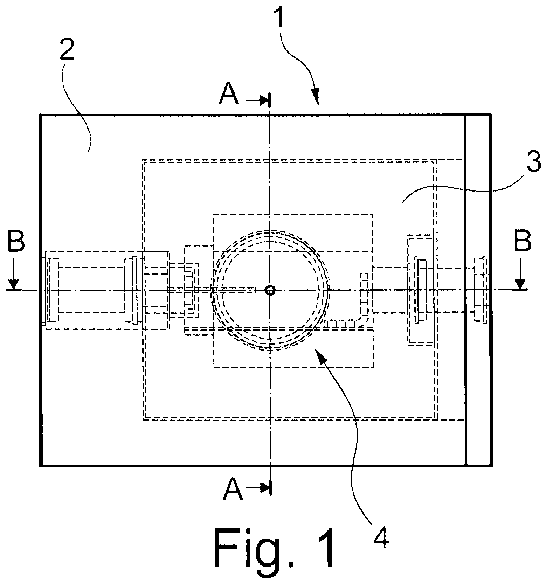

Ein bevorzugtes Ausführungsbeispiel einer Messvorrichtung ist in der Zeichnung dargestellt und wird im Folgenden näher beschrieben. Es zeigt
- Figur 1: eine Draufsicht auf die Messvorrichtung,

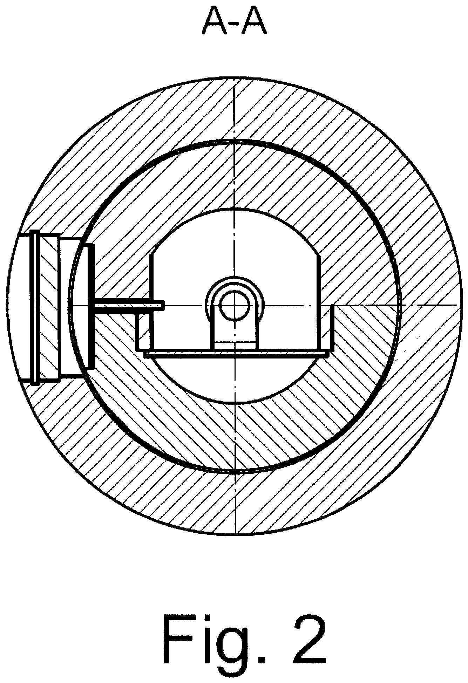

- Figur 2: einen Schnitt durch die in Figur 1 gezeigten Messvorrichtung längst der Linie AA,

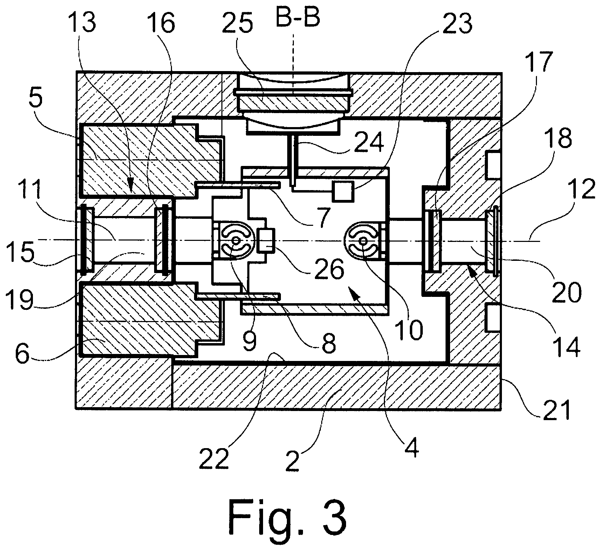

- Figur 3: einen Schnitt durch die in Figur 1 gezeigte Messvorrichtung längst der Linie BB,
- Figur 4: schematisch eine Isometrie einer Messvorrichtung und
- Figur 5: schematisch eine Ausschubeinrichtung mit Messeinrichtungen.

Die Messvorrichtung 1 weist ein Gehäuse 2 und eine Isolation 3 aus Steinwolle auf, innerhalb der eine Messeinrichtung 4 angeordnet ist. Zwei Thermogeneratoren 5 und 6 sind über Kabel 7, 8 mit der Messeinrichtung 4 verbunden. Dies ermöglicht es, die Messeinrichtung 4 mit Energie zu versorgen. Auf der Messeinrichtung sind zwei Pyrometer 9, 10 angeordnet, die jeweils auf einer Achse 11, 12 eines Messfensters 13, 14 liegen. Jedes Messfenster weist zwei Borosilikatglasscheiben 15, 16 bzw. 17, 18 auf, die derart zueinander beabstandet sind, dass zwischen ihnen ein Gas- oder Vakuumraum 19, 20 vorgesehen werden kann. Dabei liegt die äußere Scheibe 15, 18 etwa im Bereich der Gehäuseaußenwand 21 des Gehäuses 2, während die innere Scheibe 16, 17 etwa im Bereich der Gehäuseinnenwand 22 des Gehäuses 2 liegt.

Auf der Messeinrichtung 4 ist eine Funkeinrichtung 23 angeordnet, die eine Antenne 24 aufweist. Im Bereich der Antenne 24 ist im Gehäuse 2 ein Antennenfenster 25 angeordnet, das im Gehäuse 2 vorgesehen ist. Ein Energiespeicher 26 steht mit der Messeinrichtung 4 und über die Leitungen 7 und 8 mit den Thermogeneratoren 5 und 6 in Verbindung, um die von den Thermogeneratoren 5 und 6 erzeugte Energie zu speichern und der Messeinrichtung 4 zur Verfügung zu stellen.

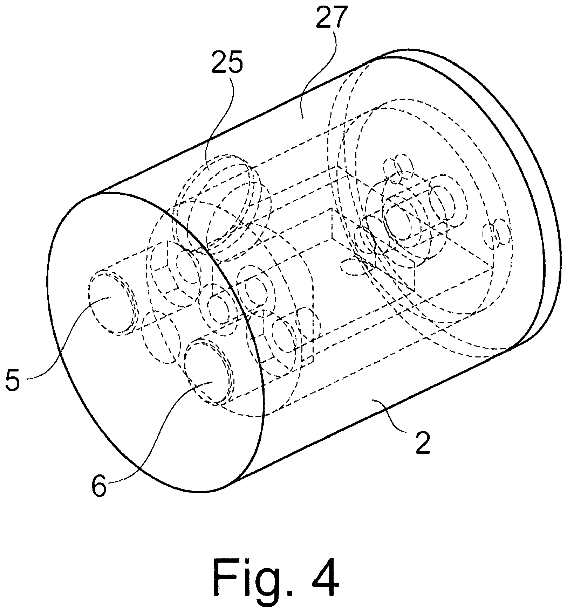

Die Figur 4 zeigt das zylinderförmige Gehäuse 2 mit den zwei Thermogeneratoren 5 und 6 und einem Antennenfenster 25 an der zylinderförmigen Wandung 27.

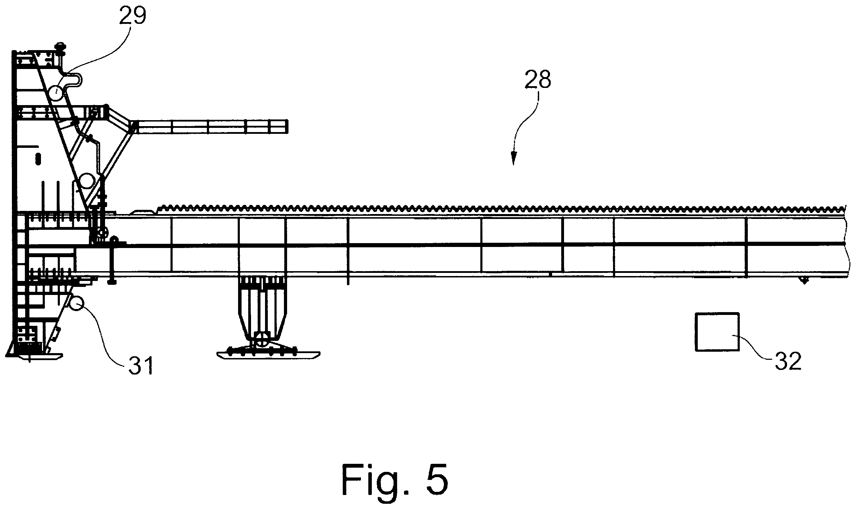

Die Befestigung derartiger Gehäuse einer Messeinrichtung an einer Ausschubeinrichtung 28 eines Koksofens (nicht gezeigt) ist in Figur 5 gezeigt. Dort sind an der Ausschubeinrichtung 28 drei Gehäuse 29, 30, 31 übereinander angeordnet, um in verschiedenen Höhen Temperaturen zu messen. Die zylinderförmigen Gehäuse 29, 30, 31 sind dabei so positioniert, dass ihre Stirnseiten jeweils den Wandungen des Koksofens gegenüberliegen, zwischen denen die Ausschubeinrichtung lateral bewegt wird.

Die Gehäuse 29, 30 und 31 weisen jeweils Antennen (nicht gezeigt) auf, über die die einzelnen Messeinrichtungen kabellos mit einer Auswerteeinheit 32 in Verbindung stehen.

## Patentansprüche

1. Messvorrichtung (1) mit einem Gehäuse (2) und einer Messeinrichtung (4), wobei die Messvorrichtung eine Isolation (3) aufweist, und einem Thermogenerator (5, 6), der eine Temperaturdifferenz an der Messvorrichtung zur Energieerzeugung für die Messeinrichtung nutzt, wobei die Messvorrichtung ein Messfenster (13, 14) und ein Pyrometer (9, 10) aufweist und die Messeinrichtung (4) innerhalb der Isolation angeordnet ist.

2. Messvorrichtung nach Anspruch 1, ***dadurch gekennzeichnet, dass*** die Isolation Steinwolle aufweist oder als evakuierte Hülle ausgebildet ist.

3. Messvorrichtung nach einem der vorhergehenden Ansprüche, ***dadurch gekennzeichnet, dass*** sie eine Funkeirichtung (23) aufweist.

4. Messvorrichtung nach einem der vorhergehenden Ansprüche, ***dadurch gekennzeichnet, dass*** sie ein Antennenfenster (25) aufweist.

5. Messvorrichtung nach einem der vorhergehenden Ansprüche, ***dadurch gekennzeichnet, dass*** sie einen Energiespeicher (26) aufweist.

6. Messvorrichtung nach einem der vorhergehenden Ansprüche, ***dadurch gekennzeichnet, dass*** die Isolation (3) eine minimale Dicke zwischen Messeinrichtung (4) und Gehäuse (2) von 20 mm hat.

7. Messvorrichtung nach einem der vorhergehenden Ansprüche, ***dadurch gekennzeichnet, dass*** das Gehäuse (2) eine minimale Dicke zwischen Gehäuseinnenwand (22) und Gehäuseaußenwand (21) von 20 mm hat.

8. Messvorrichtung nach einem der vorhergehenden Ansprüche, ***dadurch gekennzeichnet, dass*** das Gehäuse (2) einen Stahlmantel aufweist.

9. Messvorrichtung nach einem der vorhergehenden Ansprüche, ***dadurch gekennzeichnet, dass*** das Gehäuse (2) zylinderförmig ist.

10. Messvorrichtung nach einem der vorhergehenden Ansprüche, ***dadurch gekennzeichnet, dass*** das Gehäuse (2) an einer zylinderförmigen Wandung (27) ein Antennenfenster (25) aufweist

11. Messvorrichtung nach einem der vorhergehenden Ansprüche, ***dadurch gekennzeichnet, dass*** das Gehäuse (2) gegenüberliegende Messfenster (13, 14) und quer dazu ein Antennenfenster (25) aufweist.

12. Messvorrichtung nach einem der vorhergehenden Ansprüche, ***dadurch gekennzeichnet, dass*** das Gehäuse (29, 30, 31) an einer Ausschubeinrichtung (28) eines Koksofens angeordnet ist.

## Claims

1. A measuring apparatus (1) comprising a housing (2) and a measuring device (4), wherein the measuring device includes an insulation (3), and a thermogenerator (5, 6) which utilises a temperature difference at the measuring device for the generation of energy for the measuring device, wherein the measuring apparatus includes a measurement window (13, 14) and a pyrometer (9, 10) and the measuring device (4) is arranged inside the insulation.

2. The measuring apparatus according to claim 1, ***characterized in that*** the insulation includes rock wool or is configured as an evacuated casing.

3. The measuring apparatus according to one of the preceding claims, ***characterized in that*** it includes a radio device (23).

4. The measuring apparatus according to one of the preceding claims, ***characterized in that*** it includes an antenna window (25).

5. The measuring apparatus according to one of the preceding claims, ***characterized in that*** it includes an energy storage device (26).

6. The measuring apparatus according to one of the preceding claims, ***characterized in that*** the insulation (3) has a minimum thickness between the measuring device (4) and the housing (2) of 20 mm.

7. The measuring apparatus according to one of the preceding claims, ***characterized in that*** the housing (2) has a minimum thickness between the housing inner wall (22) and the housing outer wall (21) of 20 mm.

8. The measuring apparatus according to one of the preceding claims, ***characterized in that*** the housing (2) includes a steel jacket.

9. The measuring apparatus according to one of the preceding claims, ***characterized in that*** the housing (2) is cylindrical.

10. The measuring apparatus according to one of the preceding claims, ***characterized in that*** the housing (2) includes an antenna window (25) on a cylindrical wall (27).

11. The measuring apparatus according to one of the preceding claims, ***characterized in that*** the housing (2) includes measurement windows (13, 14) that lie opposite each other and an antenna window (25) that lies crosswise in relation to the latter.

12. The measuring apparatus according to one of the preceding claims, ***characterized in that*** the housing (29, 30, 31) is arranged on a discharge device (28) of a coke oven.

## Revendications

1. Dispositif de mesure (1) avec un boîtier (2) et un système de mesure (4), sachant que le dispositif de mesure comporte un isolant (3) et un générateur thermoélectrique (5, 6), qui utilise une différence de température sur le dispositif de mesure pour produire de l'énergie pour le système de mesure, sachant que le dispositif de mesure comporte une fenêtre de mesure (13, 14) et un pyromètre (9, 10) et le système de mesure (4) est disposé à l'intérieur de l'isolant.

2. Dispositif de mesure selon la revendication 1, ***caractérisé en ce que*** l'isolant comporte de la laine minérale ou est constitué sous la forme d'une enveloppe sous vide.

3. Dispositif de mesure selon l'une quelconque des revendications précédentes, ***caractérisé en ce qu***'il comporte un système radio (23).

4. Dispositif de mesure selon l'une quelconque des revendications précédentes, ***caractérisé en ce qu'***il comporte une fenêtre d'antenne (25).

5. Dispositif de mesure selon l'une quelconque des revendications précédentes, ***caractérisé en ce qu'***il comporte un réservoir d'énergie (26).

6. Dispositif de mesure selon l'une quelconque des revendications précédentes, ***caractérisé en ce que*** l'isolant (3) possède une épaisseur minimale se situant entre le système de mesure (4) et le boîtier (2) de 20 mm.

7. Dispositif de mesure selon l'une quelconque des revendications précédentes, ***caractérisé en ce que*** le boîtier (2) possède une épaisseur minimale se situant entre la paroi intérieure de boîtier (22) et la paroi extérieure de boîtier (21) de 20 mm.

8. Dispositif de mesure selon l'une quelconque des revendications précédentes, ***caractérisé en ce que*** le boîtier (2) comporte une enveloppe en acier.

9. Dispositif de mesure selon l'une quelconque des revendications précédentes, ***caractérisé en ce que*** le boîtier (2) est de forme cylindrique.

10. Dispositif de mesure selon l'une quelconque des revendications précédentes, ***caractérisé en ce que*** le boîtier (2) comporte une fenêtre d'antenne (25) sur une paroi cylindrique (27).

11. Dispositif de mesure selon l'une quelconque des revendications précédentes, ***caractérisé en ce que*** le boîtier (2) comporte des fenêtres de mesure opposées (13, 14) et une fenêtre d'antenne (25) transversalement à celles-ci.

12. Dispositif de mesure selon l'une quelconque des revendications précédentes, ***caractérisé en ce que*** le boîtier (29, 30, 31) est disposé sur un système d'extraction (28) d'un four à coke.
